# EUROPEAN PATENT APPLICATION

(11) **EP 3 291 083 A1**
(43) Date of publication of application: **07.03.2018**
(21) Application number: 16187356.7
(22) Date of filing: 06.09.2016
(51) Int. Cl.: G06F 9/44, G05B 19/418, G05B 23/02

(54) **METHOD OF DISPLAYING DATA OF A DATA PROCESSING SYSTEM, DATA PROCESSING SYSTEM OPERATING ACCORDING TO THE METHOD AND COMPUTER PROGRAM IMPLEMENTING THE METHOD**

(71) Applicant: Siemens Aktiengesellschaft, 80333 München (DE)
(72) Inventor: Verma, Amit, 91058 Erlangen (DE)

(57) **Abstract**

The disclosure provides a graphical data priority representation (34) for the visualization and control of data processing in data processing systems (10) such as industrial internet of things (IIoT) systems.

## Description

The present disclosure relates to data processing in device networks, and in particular to methods of displaying data, methods for defining priorities for data processing, methods of controlling data processing, and systems and computer program products that implement such methods.

The "Internet of Things" (IoT) is a name for a known trend in information technology, which refers to various technologies and methods for devices to exchange data via the internet and other computer networks.

These concepts are useful in industry, including industrial automation systems, machines, sensors, and so on. The "Industrial Internet of Things" (IIoT) refers generally to the collection of data from data nodes, monitoring the performance of associated devices based on the collected data, and usually managing or adjusting the control of the devices based on the collected data. An IoT architecture may be "industrial" by virtue of the types of devices which are connected, by the choice of communications protocols which are used to exchange data, by the choice of network architecture which is employed, or by physical characteristics of the devices and network components such as being able to cope with wide variations in temperature or being robust to cope with vibrations or other harsh environmental conditions.

A data node is anything that generates data samples and may for example comprise a device, a controller, a sensor or a machine; or a collection of devices, controllers, sensors or machines.

IoT and other similar networks of devices or other data nodes tend to generate a lot of data. This places demands on network infrastructure that connects the devices together and with remote platforms for monitoring and managing the devices. Because of this, it is desired to control the flow of data across the network. One way of controlling the data flow is to make a distinction between data that has a relatively high priority as compared with data that has a relatively low priority, with processing of the former being preferred over the latter.

However, it is difficult for users such as network managers or platform operators to clearly and quickly ascertain which data has which priority levels, and to make any required adjustments. There is a need to prioritize the industrial data in a granular manner, but assigning priorities to the various types of industrial data can be difficult to understand, visualize and realize clearly. Moreover, existing computer user interfaces do not provide for granular control of data priorities.

According to a first aspect of the disclosure there is provided a method of displaying data of a data processing system, wherein said data processing system comprises a plurality of data nodes arranged to provide data samples, the method comprising: generating a graphical data priority representation by: displaying, in a first display dimension, a first list with members representing the data samples, and wherein each member of the first list has an associated priority level; displaying, in a second display dimension, a second list with members comprising data sample sub-types and wherein each member of the second list has an associated priority level; wherein each display dimension is ordered according to data priority levels associated with each list member; and displaying a priority boundary demarcating different portions of the graphical data priority representation which are associated with different priority levels.

This method allows for an intuitive and easy to understand way to visualize the data priorities that have been applied in a data processing system. It allows for quick decisions to be made regarding how to change the operation of a system upon occurrence of various events such as degradation of health of a device network.

Optionally, each member of the first list represents a group of data samples, each group being provided by one or more data nodes.

Optionally, one or more of the members of the first list represents a data sample type.

Sorting by data type means that data samples of similar utility or relating to similar functionality can be easily grouped together.

Optionally, the graphical data priority representation comprises one or more further display dimensions based on further characteristics of the data samples from the data nodes.

This allows for three-dimensional or higher-dimensional graphical data priority representations to be plotted, providing rich visualizations of complex data sets.

According to a second aspect of the disclosure there is provided a method of defining priorities for data processing in a data processing system, comprising: displaying data according to the method of the first aspect; and re-drawing the priority boundary on the graphical data priority representation to change the data priority levels associated with members of one or more of the lists.

The display of the first aspect is preferably interactive so that the priorities for different data samples can be adjusted. The use of a simple graphical object, the priority boundary, makes this easy and intuitive to achieve.

Optionally, re-drawing the priority boundary is performed by a user via a user interface.

According to a third aspect of the disclosure there is provided a method of controlling data processing in a data processing system, comprising: defining data priority levels for data processing according to the second aspect; and processing the data according to the defined priority levels.

Optionally, processing the data according to priority levels comprises one or more of:
i. collecting selected data from the data nodes;
ii. transmitting selected data from the data nodes to a remote platform;
iii. storing selected data at a remote platform; or
iv. analyzing selected data at a remote platform;
said data being selected according to the data priority levels.

Optionally, said selection of data according to the data priority levels comprises selecting data in order of the priority levels from a highest priority level to a lowest priority level.

According to a fourth aspect of the disclosure there is provided a data processing system comprising a plurality of data nodes arranged to provide data samples processing means arranged to generate a graphical data priority representation by: displaying, in a first display dimension, a first list with members representing the data samples, and wherein each member of the first list (38) has an associated priority level; displaying, in a second display dimension, a second list with members comprising data sample sub-types and wherein each member of the second list has an associated priority level; wherein each display dimension is ordered according to data priority levels associated with each list member; and displaying a priority boundary demarcating different portions of the graphical data priority representation which are associated with different priority levels.

According to a fifth aspect of the disclosure there is provided a computer program product comprising instructions that, when executed by a computing device enable the computing device to generate a graphical data priority representation for data samples provided by a plurality of data nodes in a data processing system; wherein generating said graphical data priority representation comprises: displaying, in a first display dimension, a first list with members representing the data samples, and wherein each member of the first list has an associated priority level; displaying, in a second display dimension, a second list with members comprising data sample sub-types and wherein each member of the second list has an associated priority level; wherein each display dimension is ordered according to data priority levels associated with each list member; and displaying a priority boundary demarcating different portions of the graphical data priority representation which are associated with different priority levels.

The computer program product may be stored on or transmitted as one or more instructions or code on a computer-readable medium. Computer-readable media includes both computer storage media and communication media including any medium that facilitates transfer of a computer program from one place to another. A storage media may be any available media that can be accessed by a computer. By way of example such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fibre optic cable, twisted pair, digital subscriber line (DSL), or wireless technologies such as infra-red, radio, and microwave, then the coaxial cable, fibre optic cable, twisted pair, DSL, or wireless technologies such as infra-red, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media. The instructions or code associated with a computer-readable medium of the computer program product may be executed by a computer, e.g., by one or more processors, such as one or more digital signal processors (DSPs), general purpose microprocessors, ASICs, FPGAs, or other equivalent integrated or discrete logic circuitry.

Further aspects, features and advantages of the present invention will become apparent from the drawings and detailed description of the following preferred embodiments.

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: shows a data processing system;
- FIG 2: shows an embodiment of a graphical data priority representation according to the disclosure which could be used with the data processing system of FIG 1; and
- FIG 3: shows aspects of a possible implementation for a graphical data priority representation.

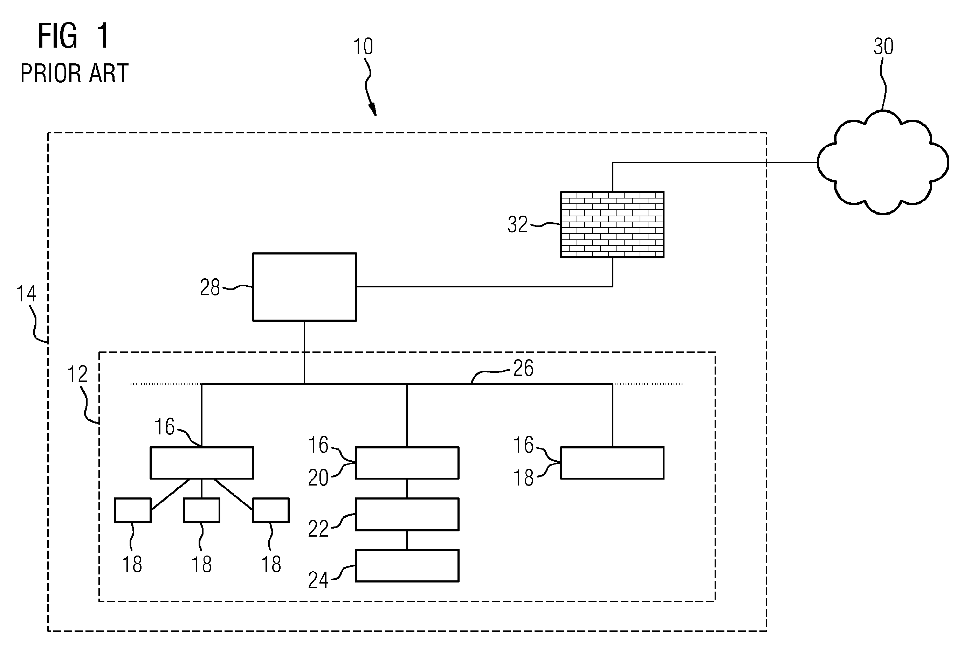

FIG 1 shows an illustrative data processing system 10, or simply "system" 10, which is shown as an example only. The data processing system 10 may be an IoT system. Here, a device network 12 is provided at a manufacturing plant 14. The device network 12 comprises a plurality of data nodes 16. Any number of data nodes 16 can be provided (from a single node up to many millions or more), but for the purposes of illustration three exemplar types of data node 16 are shown.

One type of data node 16 comprise a collection of sensors 18, each providing their own data samples. Another type of data node 16 comprises a controller 20 such as a programmable logic controller (PLC) which provides data samples gathered from machinery such as a drive 22 and motor 24. Another type of data node 16 comprises a sensor 18. The sensor 18 in this type of data node 16 does not need to be associated with any specific (industrial) device, it can be used to monitor other aspects such as ambient temperature or humidity and so on. It is to be appreciated that there are a very many other types of data node which are not illustrated here.

The data processing system 10 comprises network infrastructure including a communications bus 26 which may be coupled with the data nodes 16. The data nodes 16 can communicate data samples via field protocols such as PROFINET, PROFIBUS, Industrial Ethernet, EtherCAT, and so on.

The device network 12 is connected to a gateway 28 which acts to exchange data between the device network 12 and a remote platform 30, usually via a firewall 32. The gateway 28 may comprise a switching device and various other components to receive data from the device network 12 and send it on to the remote platform 30 for processing, reporting and analysis. The remote platform 30 may provide a cloud service for carrying out these functions.

The remote platform 30 can then send instructions back to the gateway 28 for adjusting the operation of the device network 12, the gateway 28 relaying those instructions via the network infrastructure to the connected devices to adjust their operational parameters.

It is to be appreciated that this is just one example of a data processing system to which the present disclosure may be applied.

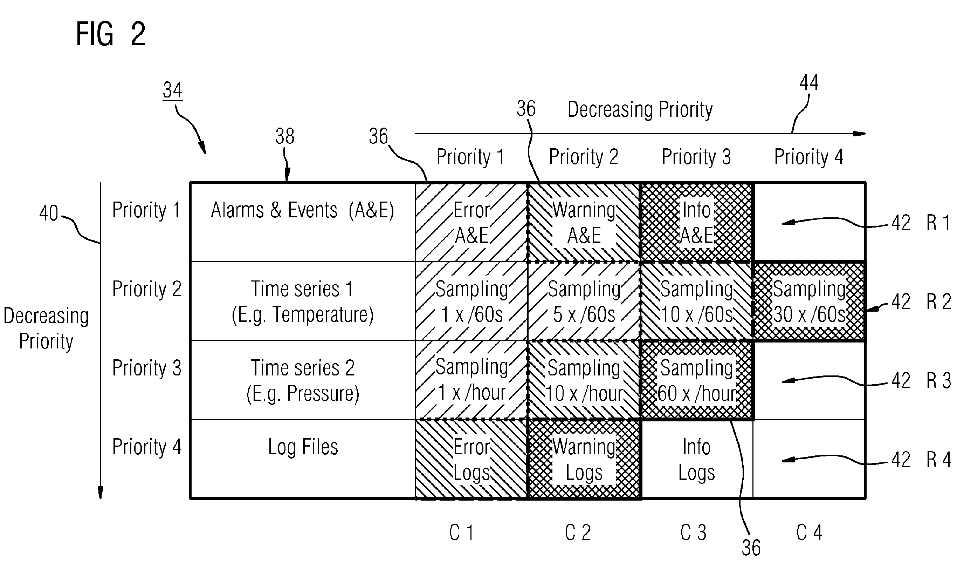

As shown in the non-limiting and specific example of FIG 2, the present disclosure provides a graphical data priority representation 34 which can be used to visualize priorities for data which is to be processed in a data processing system 10. The graphical data priority representation 34 comprises the grid which is shown - the other annotations in the figure are for purposes of illustration only, although in alternative embodiments data such as priority levels or row/column indices could be displayed. The graphical data priority representation 34 also comprises one or more priority boundaries 36 which are used to demarcate different portions of the graphical data priority representation 34 which are associated with different priority levels.

The disclosure also preferably provides a user interface to define priorities for data processing. The user interface may suitably provide means for interacting with displayed priority boundaries 36 to change the priority levels for given data samples, data types, data sub-types or other data characteristics.

Generally, a data node 16 provides data samples or a set of data samples from one or more data source. Each data source provides data of a particular type; and data from each data source can be associated with a particular priority level, which can represent its relative importance as compared with other data items. The priority level may suitably be represented by numerical value but may be represented by other means such as alphabetical or alphanumeric characters, descriptive text strings, symbols, colours, or combinations of such.

Data samples provided from each data source may also have a sub-type, which can define some other characteristic of the data samples which are being collected. Data samples may also have other characteristics beyond the basic type and sub-type.

In a graphical data priority representation 34 according to the disclosure, a list 38 is presented in a first display dimension 40, said list having members which represent the data samples from the data nodes 16. Members of the list 38 may comprise a descriptor for each individual data source, or for each individual data node 16, or members of the list 38 may comprise descriptors of groups of data samples. The groups may be arbitrarily defined, for example being groups of data sources in a given location or which are linked to a particular function or workflow. The groups may comprise descriptors of data types. It is possible for the list 38 to comprise members with a mixture of descriptors, that is, some for specific data sources, and some for general data types and so on.

In a graphical data priority representation 34 according to the disclosure, at least one second list 42 is displayed, said list 42 having members which comprise data sample sub-types. Members of the second list(s) 42 may comprise a descriptor for each data sub-type and a descriptor of an associated priority level for each sub-type. The priority level may be defined as discussed above.

Normally, a separate second list 42 representing data sample sub-types will be displayed for each member of the first list 38 representing the data samples. However, it will be appreciated that there may be some members of the first list 38 for which there are no data sub-types, in which case no separate second list 42 will be displayed.

The DPM of FIG 2 represents an embodiment of the disclosure in which there are two display dimensions 40, 44. However, additional display dimensions can be added to represent alternative or additional characteristics of the data from the data nodes 16.

The data types, data priority levels, data sub-types and their respective descriptors can be included in metadata in the data generated by the data nodes 16, or can be inferred from context.

The display dimensions 40, 44 of the graphical data priority representation 34 are ordered by priority level so that members of the lists 38, 42 which have the same priority levels are grouped together. This is preferably achieved by ordering the lists in each display dimension 40, 44 in the same sense, that is, either all in increasing order of priority or all in decreasing order of priority, such that different portions of the displayed graphical data priority representation 34 are populated with members which have different priority levels. The different portions can be demarcated with priority boundaries 36 so that a user can easily understand how the data processing will be carried out by the data processing system 10.

In the example of FIG 2, the two dimensions 40, 44 of the DPM 34 are based on inter comparison and intra comparison of industrial data.

For inter-comparison of data, it is recognized that certain types of data (e.g. alarms and events) could be of higher priority than the time series data (e.g. temperature values).

For intra-comparison of data, it is recognized that certain time series values should be collected with a higher priority with a lower sample rate, and others should be collected with a lower priority with a higher sample rate. For example, collecting temperature values every 60 seconds could be deemed as being of relatively higher priority as compared with collecting temperature values every 5 seconds. The rate of data collection is a data sub-type, with different values having different priorities.

The rows R1, R2, R3, R4 contain different types of industrial data like alarms & events (A&E), time series data points, and log files. The rows here are used for inter-comparison of data.

Data of various types are placed in the rows in the decreasing order of priority. Here A&E data is assumed to more important than time series data, followed by data from log files.

The columns C1, C2, C3, C4 contain different data sub-types and are arranged according to different priority levels which may correspond to different "depths" for collection of data. For example, data samples of a type of alarms and events may have data sub-types including error, warning and information ("info") categories. Similar sub-types may also exist for log files.

Time series data samples can be collected according to data sub-types which define different sampling rates such as once per 60 seconds (lx / 60s), 5x / 60s, etc. The columns here are used for intra-comparison of data. Data of different depths are placed in the columns in the decreasing order of priorities.

In this priority map, priority boundaries 36 are defined. For example, three priority boundaries 36 are shown in the sample DPM. The priority boundaries 36 define different portions of the DPM which represent different priority levels. A first portion comprises the DPM cells {(R1, C1), (R2, C1), (R2, C2), (R3, C1)}. The data in this portion has the highest priority level and contains the A&E errors, temperature values with a sampling rate of 5x per minute, and pressure values with a sampling rate of once per hour.

Similarly, a second portion comprises DPM cells {(R1, C2), (R2, C3), (R3, C2), (R4, C1)}. The data in this portion has a priority level of a second relative value and contains the A&E warnings, temperature values with a sampling rate of 10x per minute, pressure values with a sampling rate of 10x per hour, and error log files.

Similarly, a third portion comprises DPM cells {(R1, C3), (R2, C4), (R3, C3), (R4, C2)}. The data in this portion has a priority level of a third relative value and contains the A&E information data, temperature values with a sampling rate of 30x per minute, pressure values with a sampling rate of 60x per hour, and error warning log files.

One example area where the present disclosure has utility is in the area of cloud platforms for the Industrial Internet of Things (1IoT). Typically, data from a device network 12 which may comprise industrial automation systems, machines, sensors, and so on is collected via cloud gateways 28 and sent to a remote platform 30 for storage and analysis.

The types of industrial data collected in this manner could have different priorities defined for the processing of the data, said processing including for example collection of the data from data nodes 16, transmission of data to the remote platform 30 via the gateway 28, storage of the data in the remote platform 30, or analysis of the data by the remote platform 30.

There are various use cases for the prioritization of data for processing. For example:
1. Data of higher priority could be collected first from a data node 16, and the lower priority data should be collected only if the system (data node 16 along with the cloud gateway 28) performance capacity permits.
2. Data of higher priority could be transmitted to the remote platform 30 first followed by the lower priority data,
3. Data of higher priority could undergo stringent checks for error detection (e.g. cyclic redundancy checks) as compared to the data of lower priority.
4. Data of higher priority could be stored on fast and efficient storage in the cloud, while data of lower priority could be stored on alternative more cost-efficient storage.
5. In a pricing model for cloud services, the price for collecting high priority data could be higher than that of low priority data.

Each of these use cases is improved by the present disclosure, which provides for easy and intuitive management of priority levels for controlling these parameters.

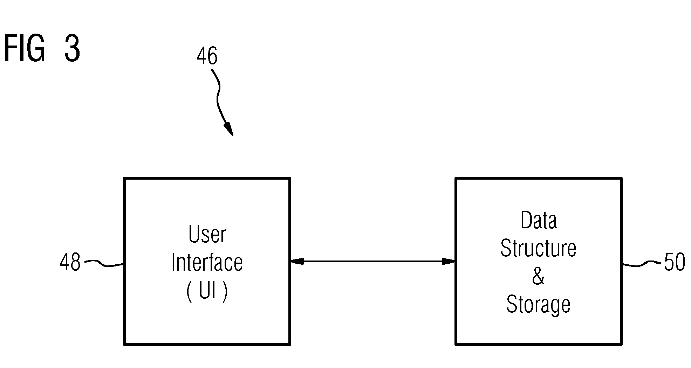

The graphical data priority representation 34 could be implemented in any computing device with a user interface (UI) or a human machine interface (HMI). FIG 3 illustrates an implementation embodiment of a data priority representation system 46. It has two main components - a UI component 48 and a back-end component 50 with the appropriate data structure and data storage. The two components 48, 50 can reside on a single computing device or can be on different devices. Typically, in cloud environments, the UI 48 will run locally on a user's PC and the back-end component 50 will run in a data center.

The UI component 48 could be implemented via hypertext markup language version 5 (HTML5), the JavaScript library known as UI5, and other such technologies. The user interacts with the UI component 48 to define the inter-comparisons of data, intra-comparisons of data, and the priority boundaries 36. The user interaction could be facilitated by touch technology, pointing technology, or simply input via a keyboard.

Those skilled in the art will readily understand the invention can be applied to plants, plant sections (e.g. test fields), plant components (e.g. assembly lines or production lines), plant units (e.g. pumps, squeezer, compressors or machines).

Furthermore, those skilled in the art will readily understand the invention can be used in production industries, manufacturing industries, continuous industries, process industries and batch processing industries.

In addition to the embodiments of the aspects of the present invention described above, those of skill in the art will be able to arrive at a variety of other arrangements and steps which, if not explicitly described in this document, nevertheless embody the principles of the invention and fall within the scope of the appended claims.

## Claims

1. A method of displaying data of a data processing system (10), wherein said data processing system (10) comprises a plurality of data nodes (16) arranged to provide data samples, the method comprising:
generating a graphical data priority representation (34) by:
displaying, in a first display dimension (40), a first list (38) with members representing the data samples, and wherein each member of the first list (38) has an associated priority level;
displaying, in a second display dimension (44), a second list (42) with members comprising data sample sub-types and wherein each member of the second list (42) has an associated priority level;
wherein each display dimension (40, 44) is ordered according to data priority levels associated with each list member; and
displaying a priority boundary (36) demarcating different portions of the graphical data priority representation (34) which are associated with different priority levels.

2. The method of claim 1, wherein each member of the first list (38) represents a group of data samples, each group being provided by one or more data nodes (16).

3. The method of claim 2, wherein one or more of the members of the first list (38) represents a data sample type.

4. The method of any preceding claim, wherein the graphical data priority representation (34) comprises one or more further display dimensions based on further characteristics of the data samples from the data nodes (16).

5. A method of defining priorities for data processing in a data processing system (10), comprising:
displaying data according to the method of any of claims 1 to 4; and
re-drawing the priority boundary (36) on the graphical data priority representation (34) to change the data priority levels associated with members of one or more of the lists (38, 42).

6. The method of claim 5, wherein re-drawing the priority boundary (36) is performed by a user via a user interface (50).

7. A method of controlling data processing in a data processing system (10), comprising:
defining data priority levels for data processing according to the method of claim 5 or claim 6; and
processing the data according to the defined priority levels.

8. The method of any of claims 5 to 7, wherein processing the data according to priority levels comprises one or more of:
i. collecting selected data from the data nodes;
ii. transmitting selected data from the data nodes to a remote platform;
iii. storing selected data at a remote platform; or
iv. analyzing selected data at a remote platform;
said data being selected according to the data priority levels.

9. The method of claim 8, wherein said selection of data according to the data priority levels comprises selecting data in order of the priority levels from a highest priority level to a lowest priority level.

10. A data processing system (10) comprising
a plurality of data nodes (16) arranged to provide data samples
processing means arranged to generate a graphical data priority representation (34) by:
displaying, in a first display dimension (40), a first list (38) with members representing the data samples, and wherein each member of the first list (38) has an associated priority level;
displaying, in a second display dimension (44), a second list (42) with members comprising data sample sub-types and wherein each member of the second list (42) has an associated priority level;
wherein each display dimension (40, 44) is ordered according to data priority levels associated with each list member; and
displaying a priority boundary (36) demarcating different portions of the graphical data priority representation (34) which are associated with different priority levels.

11. A computer program product comprising instructions that, when executed by a computing device enable the computing device to generate a graphical data priority representation (34) for data samples provided by a plurality of data nodes (16) in a data processing system (10);
wherein generating said graphical data priority representation (34) comprises:
displaying, in a first display dimension (40), a first list (38) with members representing the data samples, and wherein each member of the first list (38) has an associated priority level;
displaying, in a second display dimension (44), a second list (42) with members comprising data sample sub-types and wherein each member of the second list (42) has an associated priority level;
wherein each display dimension (40, 44) is ordered according to data priority levels associated with each list member; and
displaying a priority boundary (36) demarcating different portions of the graphical data priority representation (34) which are associated with different priority levels.
